# EUROPEAN PATENT APPLICATION

(11) **EP 4 800 751 A1**
(43) Date of publication of application: **02.09.2026**
(21) Application number: 24910733.5
(22) Date of filing: 11.12.2024
(51) Int. Cl.: H01M 4/131

(54) **MODIFIED NICKEL-BASED POSITIVE ELECTRODE MATERIAL, PREPARATION METHOD THEREFOR, AND LITHIUM-ION BATTERY**

(30) Priority: 27.12.2023 CN 202311830412
(71) Applicant: BASF Shanshan Battery Materials Co., Ltd., Changsha, Hunan 410205 (CN)
(72) Inventor: ZHAO, Xiaokang, Changsha, Hunan 410205 (CN); LUO, Gui, Changsha, Hunan 410205 (CN); TAN, Xinxin, Changsha, Hunan 410205 (CN)
(74) Representative: Zacco Denmark A/S
(86) International application number: PCT/CN2024/138594
(87) International publication number: WO 2025/139802

(57) **Abstract**

A modified nickel-based positive electrode material, a preparation method therefor, and a lithium-ion battery. The modified nickel-based positive electrode material includes a nickel-based positive electrode material matrix and a doping element doped in the nickel-based positive electrode material matrix. The electronegativity of the doping element is higher than the electronegativity of lithium and transition metal elements in the nickel-based positive electrode material matrix. The porosity of the material is 10% to 20%. In the modified nickel-based positive electrode material, part of the doping element enters the lattice of the nickel-based positive electrode material matrix, and the electronegativity of the doping element is greater than that of lithium and the transition metal elements; thus, the doping element has a stronger covalency, a higher bond strength, and a higher oxidation potential, which stables lattice oxygen in the structure and reduces the release of lattice oxygen, thereby improving the structural stability of the material.

## Description

### CROSS-REFERENCE

This application claims priority to Chinese patent application No. 202311830412.3, filed on December 27, 2023, entitled "MODIFIED NICKEL-BASED POSITIVE ELECTRODE MATERIAL, PREPARATION METHOD THEREFOR, AND LITHIUM-ION BATTERY", which is incorporated herein by reference in its entirety.

### TECHNICAL FIELD

The present application belongs to the field of lithium-ion batteries, and particularly relates to a modified nickel-based positive electrode material, a preparation method thereof, and a lithium-ion battery.

### BACKGROUND

To meet the demand for increasing driving range in the new energy vehicle market, competition in high energy density batteries has intensified, leading to significant advancements in high-energy lithium-ion batteries. In the race for energy density, there is an urgent need to develop lithium-ion battery materials with higher energy density and longer cycle life. Nickel-based positive electrode materials have attracted widespread attention due to advantages such as high capacity and high voltage plateau.

The development of nickel-based positive electrode materials is trending toward high nickel content and high voltage. Increasing the nickel content and operating voltage is the most direct way to improve the specific capacity. However, this also brings challenges such as high residual lithium content, unstable bulk structures, severe lithium-nickel cation mixing, surface side reactions, long lithium-ion transport paths, and poor ionic conductivity, which adversely affect the capacity, rate performance, and long-term cycling performance. Existing technologies address these issues through modification methods such as doping and coating. However, the effect of doping modifications remains insufficient, and issues such as unstable bulk structures, surface side reactions, long lithium-ion transport paths, and poor ionic conductivity still persist, affecting the electrochemical performance of nickel-based positive electrode materials.

### SUMMARY

The present application provides a modified nickel-based positive electrode material with good rate performance, good cycling performance, and relatively high capacity, along with a preparation method thereof and a lithium-ion battery.

To address the above technical issues, the technical solutions provided in the present application are as follows:
A first aspect of the present application provides a modified nickel-based positive electrode material, including a nickel-based positive electrode material matrix and a doping element doped in the nickel-based positive electrode material matrix, wherein the doping element includes doping element L with a high electronegativity, the electronegativity of the doping element L is higher than that of lithium and transition metal elements in the nickel-based positive electrode material matrix, and a porosity of the modified nickel-based positive electrode material is in a range from 10% to 20%.

The doping element L having higher electronegativity than lithium and transition metal elements in the nickel-based positive electrode material matrix, exhibits a stronger covalency, a higher bond strength, and a higher oxidation potential, which stabilizes lattice oxygen in the structure and reduces the release of lattice oxygen, thereby improving the structural stability of the material. A part of the doping element L enters the crystal lattice of the nickel-based positive electrode material matrix, while another part of the doping element L adheres to the interstices between primary particles inside the matrix, forming an intercalation structure. The intercalated species present in the interstices between the primary particles are removed through a specific water-washing process, achieving a pore-forming effect and forming a high-porosity material.

In any embodiment, the electronegativity of the doping element L is greater than 2.0.

In any embodiment, the doping element L includes at least one of B, C, N, S, F, Cl, Br, or I.

In any embodiment, a mass of the doping element L accounts for 0.05% to 0.2% of a mass of the modified nickel-based positive electrode material.

In any embodiment, a specific surface area of the modified nickel-based positive electrode material is in a range from 0.8 m²/g to 1.5 m²/g, and a total surface residual lithium content of the modified nickel-based positive electrode material is in a range from 1000 ppm to 1800 ppm.

In any embodiment, the modified nickel-based positive electrode material is represented by a general chemical formula Li_{z}Ni_{1-x-y}CoₓMe_{y}LᵤMᵥN_{w}O₂₋ₜ, wherein 0.9≤z≤1.1, 0≤x≤0.2, 0≤y≤0.2, 0<u≤0.007,0≤v≤0.01, 0≤w≤0.01,-0.05≤t≤0.05, Me includes Mn, Al, or a combination thereof, M includes one or more selected from the group consisting of Na, K, Mg, Ca, Sr, Ba, Zr, Ti, and Y, and N includes one or more selected from the group consisting of B, La, Ce, Al, Co, Ti, and W.

A second aspect of the present application provides a method for preparing the modified nickel-based positive electrode material as described above, including the following steps:
(1) mixing a positive electrode material precursor, a lithium source, and a doping agent uniformly, and then sintering to obtain a sintered product;
(2) subjecting the sintered product obtained in step (1) to water-washing and drying to obtain a water-washed product;
(3) uniformly mixing the water-washed product obtained in step (2) with a coating agent containing element N, and then sintering to obtain the modified nickel-based positive electrode material.

In the preparation method of the present application, a part of the element L enters the crystal lattice of the nickel-based positive electrode material matrix, while another part of the element L adheres to the interstices between primary particles inside the matrix, forming an intercalation structure. The intercalated species in the interstices between the primary particles are removed through a specific water-washing process, achieving a pore-forming effect and forming a modified nickel-based positive electrode material with a high porosity.

In any embodiment, in step (1), the doping agent includes an element L-containing doping agent, and a mass ratio of the element L-containing doping agent to the positive electrode material precursor is denoted as *a*, wherein *a* is in a range from 2% to 8%. In the present application, the addition of a large amount of the intercalation compound containing the doping element L in combination with the specific water-washing process can form a high-porosity material, which can shorten the lithium-ion diffusion distance, accelerate the lithium-ion diffusion rate, and thus achieve a relatively high capacity, thereby improving the rate performance of the material.

In any embodiment, the element L-containing doping agent is an inorganic acid salt having a solubility *s* greater than 10 grams per 100 grams of water (g/100 g water) at 20 °C.

In any embodiment, in step (2), during the water-washing, a solid-to-liquid mass ratio is denoted as *b*, wherein *b*≤*s*(1+*a*)/500*a*, which ensures that the intercalated species in the interstices between the primary particles inside the matrix can be removed during the water-washing, thereby achieving the purpose of pore formation.

In any embodiment, in step (2), during the water-washing, the solid-to-liquid mass ratio *b* is in a range from 0.5 to 1.8.

In any embodiment, in step (2), the water-washing is performed at a temperature of 5°C to 25 °C and at a stirring speed in a range from 500 revolutions per minute (rpm) to 900 rpm.

In any embodiment, the sintering in step (1) includes two-stage sintering, wherein a first-stage sintering is performed at a first-stage sintering temperature ranging from 400 °C to 600 °C and held at the first-stage sintering temperature for 2 hours to 5 hours, and a second-stage sintering is performed at a second-stage sintering temperature ranging from 700 °C to 900 °C and held at the second-stage sintering temperature for 8 hours to 20 hours.

In any embodiment, the sintering in step (3) is performed at a sintering temperature of 300 °C to 700 °C and held at the sintering temperature for 4 hours to 10 hours.

In any embodiment, the lithium source is one or more selected from the group consisting of lithium carbonate, lithium hydroxide, lithium nitrate, and lithium phosphate.

In any embodiment, the doping agent is an inorganic acid salt containing both element M and element L.

A third aspect of the present application provides a lithium-ion battery, wherein a positive electrode material in the lithium-ion battery includes the modified nickel-based positive electrode material in the first aspect of the present application or the modified nickel-based positive electrode material prepared by the method in the second aspect of the present application.

Compared with the prior art, the present application has the following advantages:
(1) The modified nickel-based positive electrode material of the present application is doped and modified with high-electronegativity doping element L. A part of the doping element L enters the crystal lattice of the nickel-based positive electrode material matrix, and the electronegativity of the doping element L is greater than that of lithium and transition metal elements in the material matrix, exhibiting a stronger covalency, a higher bond strength, and a higher oxidation potential, which stabilizes lattice oxygen in the structure and reduces release of lattice oxygen, thereby improving the structural stability of the material.
(2) The modified nickel-based positive electrode material of the present application is doped and modified with high-electronegativity doping element L. Another part of the high-electronegativity doping element L adheres to the interstices between primary particles inside the matrix, inhibiting the growth of the primary particles and forming an intercalation structure. The intercalated species in the interstices between the primary particles are removed through a subsequent specific water-washing process to achieve a pore-forming effect and form a high-porosity material, which shortens the lithium-ion diffusion distance and achieves a relatively high capacity.
(3) In the preparation method of the present application, a specific water-washing process is employed, which not only removes the high-solubility intercalated species from the matrix to achieve a pore formation effect and form a high-porosity material matrix, but also washes away residual alkali from the surface of the material matrix to form a low-impedance surface layer, which shortens the lithium-ion diffusion distance and accelerates the lithium-ion diffusion rate, and thus achieves a relatively high capacity, thereby improving the rate performance of the material.
(4) The preparation method of the present application adopts surface coating and dry sintering to repair surface structural defects generated during the water-washing of the high-nickel material, thereby reducing the surface stress of the material. Meanwhile, the coating agent can react with residual lithium on the surface of the material to further reduce residual lithium and lower the specific surface area of the material, forming an ion-conducting layer, which can protect the material surface and suppress side reactions with the electrolyte during cycling, thereby improving the cycling stability of the material. Furthermore, this approach can form lithium-ion transport channels while stabilizing surface oxygen atoms, inhibiting the formation of nickel oxide phase from the side reactions of the high-nickel components on the surface of high-nickel material during cycling, thereby improving the cycling stability of the material.

### BRIEF DESCRIPTION OF THE DRAWINGS

To better describe and illustrate the embodiments or examples provided by the present application, reference can be made to one or more drawings. Additional details or examples used to describe the drawings should not be considered as limiting the scope of the present application, the currently described embodiments or examples, or the best modes as currently understood for the application. Moreover, the same components are denoted by the same reference numerals throughout the drawings. In the drawings:
FIG. 1 is a scanning electron microscopy (SEM) image of a sintered product obtained in step (1) of Example 1 of the present application.
FIG. 2 is an SEM image of a water-washed product obtained in step (2) of Example 1 of the present application.
FIG. 3 is an SEM image of a modified nickel-based positive electrode material prepared in Example 1 of the present application.
FIG. 4 is a sectional view of the modified nickel-based positive electrode material prepared in Example 1 of the present application.
FIG. 5 is an SEM image of a modified nickel-based positive electrode material prepared in Comparative Example 1 of the present application.
FIG. 6 is a sectional view of the modified nickel-based positive electrode material prepared in Comparative Example 1 of the present application.

### DETAILED DESCRIPTION

To facilitate the understanding of the present application, it will be described below in conjunction with the drawings and embodiments. However, the scope of protection of the present application is not limited to the specific embodiments described below.

Unless otherwise defined, all technical terms used in the following description have meanings commonly understood by those skilled in the art. The terms used herein are for the purpose of describing specific embodiments only and are not intended to limit the scope of protection of the present application.

Unless otherwise specifically stated, raw materials, reagents, instruments, and equipment used in the present application are commercially available or prepared by conventional methods.

### Example 1

A modified nickel-based positive electrode material according to the present application includes a nickel-based positive electrode material matrix and a doping element doped in the nickel-based positive electrode material matrix. The modified nickel-based positive electrode material is represented by a chemical formula: Li_{1.0}Ni_{0.900}Co_{0.045}Mn_{0.055}S_{0.0056}B_{0.001}O_{1.9944}, in which S is a doping element and B is a coating element. The modified nickel-based positive electrode material is composed of polycrystal secondary spheres with a D50 particle size of 9.83 µm, a specific surface area of 1.04 m²/g, and a total residual lithium content of 1418 ppm. The porosity of the modified nickel-based positive electrode material is 12.21%. The mass of the doping element S accounts for 0.17% of the total mass of the modified nickel-based positive electrode material.

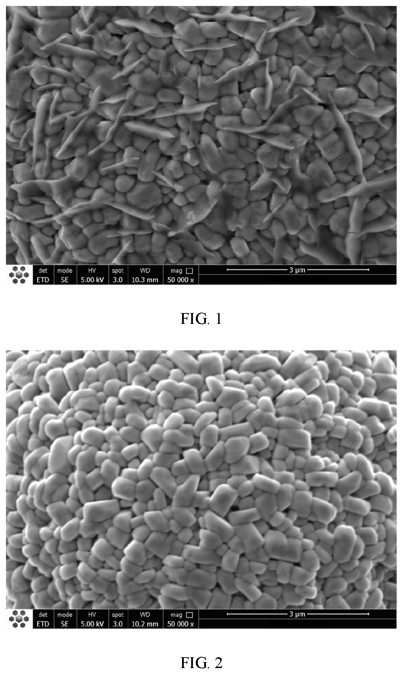

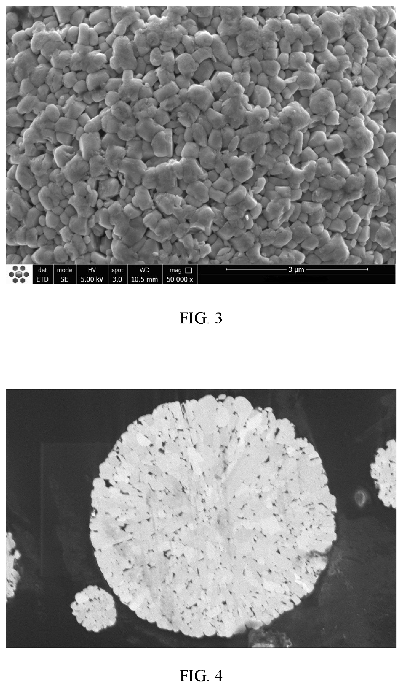

The preparation method of the modified nickel-based positive electrode material of this example included the following steps:
(1) Nickel-cobalt-manganese hydroxide precursor Ni_{0.90}Co_{0.045}Mn_{0.055}(OH)₂, lithium hydroxide monohydrate, and lithium sulfate were added to a high-speed mixer at a molar ratio of 1:1.05:0.03, stirred at a rotating speed of 1800 r/min for 30 minutes. Subsequently, in a box furnace with an oxygen concentration ≥96%, the mixture was heated to 500 °C at a heating rate of 3 °C/min and held at 500 °C for 2 hours, subsequently heated to 754 °C and held at 754 °C for 11 hours, and then naturally cooled to room temperature. The material was crushed and sieved through a 300-mesh sieve to obtain a sintered product. The SEM image of the sintered product is shown in FIG. 1, and it can be seen from the figure that the material is crystalline secondary spheres composed of primary particles, with flake-shaped lithium sulfate inserted into the interstices between the primary particles, exhibiting an intercalation structure.
(2) According to the conditions that the mass ratio *a* of the doping agent lithium sulfate to the nickel-cobalt-manganese hydroxide precursor was 5.6% and the solubility *s* of the doping agent was 25 g/100 g water, the solid-to-liquid mass ratio during water-washing was calculated to be less than 0.94. The sintered product was washed with deionized water at a solid-to-liquid mass ratio *b* of 0.9 for 10 minutes at a stirring speed of 700 rpm and a deionized water temperature of 8 °C. After washing, the sample was placed in a vacuum oven, vacuum-dried at 140 °C for 6 hours, and then naturally cooled to room temperature. The product was sieved through a 300-mesh sieve to obtain a water-washed product. The SEM image of the water-washed product is shown in FIG. 2. The flake-shaped lithium sulfate in the matrix disappeared, which was dissolved in water and washed away.
(3) The water-washed product and boric acid were added to a high-speed mixer at a molar ratio of 1:0.001, stirred at a rotating speed of 1800 r/min for 30 minutes. Subsequently, in a box furnace with oxygen atmosphere, the mixture was heated to 300 °C at a heating rate of 3 °C/min and held at 300 °C for 6 hours, and naturally cooled to room temperature. The product was sieved through a 300-mesh sieve to obtain the modified nickel-based positive electrode material of this example. The SEM image of the modified nickel-based positive electrode material is shown in FIG. 3 and its sectional view is shown in FIG. 4. It can be seen from the figures that the material has a high porosity, with uniform pores between primary particles. The porosity calculated by image processing is 12.21%.

### Example 2

A modified nickel-based positive electrode material according to the present application includes a nickel-based positive electrode material matrix and a doping element doped in the nickel-based positive electrode material matrix. The modified nickel-based positive electrode material is represented by a chemical formula: Li_{0.9956}Na_{0.0044}Ni_{0.900}Co_{0.045}Mn_{0.055}Cl_{0.0044}B_{0.001}O_{1.9956}, in which Na and Cl are doping elements and B is a coating element. The modified nickel-based positive electrode material is composed of polycrystal secondary spheres with a D50 particle size of 9.73 µm, a specific surface area of 0.94 m²/g, and a total residual lithium content of 1258 ppm. The porosity of the modified nickel-based positive electrode material is 15.99%. The mass of the doping element Cl accounts for 0.15% of the total mass of the modified nickel-based positive electrode material.

The preparation method of the modified nickel-based positive electrode material of this example included the following steps:
(1) Nickel-cobalt-manganese hydroxide precursor Ni_{0.90}Co_{0.045}Mn_{0.055}(OH)₂, lithium hydroxide monohydrate, and sodium chloride were added to a high-speed mixer at a molar ratio of 1:1.05:0.03, stirred at a rotating speed of 1800 r/min for 30 minutes. Subsequently, in a box furnace with an oxygen concentration ≥96%, the mixture was heated to 500 °C at a heating rate of 3 °C/min and held at 500 °C for 2 hours, subsequently heated to 754 °C and held at 754 °C for 11 hours, and then naturally cooled to room temperature. The material was crushed and sieved through a 300-mesh sieve to obtain a sintered product.
(2) According to the conditions that the mass ratio *a* of the doping agent sodium chloride to the nickel-cobalt-manganese hydroxide precursor was 3.0%, and the solubility *s* of the doping agent was 36 g/100 g water, the solid-to-liquid mass ratio during water-washing was calculated to be less than 2.4. The sintered product was washed with deionized water at a solid-to-liquid mass ratio *b* of 1.0 for 10 minutes at a stirring speed of 700 rpm and a deionized water temperature of 8 °C. After washing, the sample was placed in a vacuum oven, vacuum-dried at 140 °C for 6 hours, and then naturally cooled to room temperature. The product was sieved through a 300-mesh sieve to obtain a water-washed product.
(3) The water-washed product and boric acid were added to a high-speed mixer at a molar ratio of 1:0.001, stirred at a rotating speed of 1800 r/min for 30 minutes. Subsequently, in a box furnace with oxygen atmosphere, the mixture was heated to 300 °C at a heating rate of 3 °C/min and held at 300 °C for 6 hours, and naturally cooled to room temperature. The product was sieved through a 300-mesh sieve to obtain the modified nickel-based positive electrode material of this example.

### Example 3

A modified nickel-based positive electrode material according to the present application includes a nickel-based positive electrode material matrix and a doping element doped in the nickel-based positive electrode material matrix. The modified nickel-based positive electrode material is represented by a chemical formula: Li_{0.9957}K_{0.0043}Ni_{0.900}Co_{0.045}Mn_{0.055}F_{0.0043}B_{0.001}O_{1.9957}, in which K and F are doping elements and B is a coating element. The modified nickel-based positive electrode material is composed of polycrystal secondary spheres with a D50 particle size of 9.78 µm, a specific surface area of 0.94 m²/g, and a total residual lithium content of 1304 ppm. The porosity of the modified nickel-based positive electrode material is 17.82%. The mass of the doping element F accounts for 0.08% of the total mass of the modified nickel-based positive electrode material.

The preparation method of the modified nickel-based positive electrode material of this example included the following steps:
(1) Nickel-cobalt-manganese hydroxide precursor Ni_{0.90}Co_{0.045}Mn_{0.055}(OH)₂, lithium hydroxide monohydrate, and potassium fluoride were added to a high-speed mixer at a molar ratio of 1:1.05:0.03, stirred at a rotating speed of 1800 r/min for 30 minutes. Subsequently, in a box furnace with an oxygen concentration ≥96%, the mixture was heated to 500 °C at a heating rate of 3 °C/min and held at 500 °C for 2 hours, subsequently heated to 754 °C and held at 754 °C for 11 hours, and then naturally cooled to room temperature. The material was crushed and sieved through a 300-mesh sieve to obtain a sintered product.
(2) According to the conditions that the mass ratio *a* of the doping agent potassium fluoride to the nickel-cobalt-manganese hydroxide precursor was 2.9%, and the solubility *s* of the doping agent was 95 g/100 g water, the solid-to-liquid mass ratio during water-washing was calculated to be less than 6.52. The sintered product was washed with deionized water at a solid-to-liquid mass ratio *b* of 1.0 for 10 minutes at a stirring speed of 700 rpm and a deionized water temperature of 8 °C. After washing, the sample was placed in a vacuum oven, vacuum-dried at 140 °C for 6 hours, and then naturally cooled to room temperature. The product was sieved through a 300-mesh sieve to obtain a water-washed product.
(3) The water-washed product and boric acid were added to a high-speed mixer at a molar ratio of 1:0.001, stirred at a rotating speed of 1800 r/min for 30 minutes. Subsequently, in a box furnace with oxygen atmosphere, the mixture was heated to 300 °C at a heating rate of 3 °C/min and held at 300 °C for 6 hours, and naturally cooled to room temperature. The product was sieved through a 300-mesh sieve to obtain the modified nickel-based positive electrode material of this example.

### Comparative Example 1

A modified nickel-based positive electrode material in this comparative example is represented by a chemical formula: Li_{1.0}Ni_{0.90}Co_{0.045}Mn_{0.055} B_{0.001}O₂, which is composed of polycrystal secondary spheres with a D50 particle size of 9.8 µm, a specific surface area of 0.48 m²/g, and a total residual lithium content of 1150 ppm. The porosity of the modified nickel-based positive electrode material is 1.2%.

The preparation method of the modified nickel-based positive electrode material of this comparative example differs from Example 1 only in that no lithium sulfate doping agent was introduced. The preparation method was as follows:
(1) Nickel-cobalt-manganese hydroxide precursor Ni_{0.90}Co_{0.045}Mn_{0.055}(OH)₂ and lithium hydroxide monohydrate were added to a high-speed mixer at a molar ratio of 1:1.05, stirred at a rotating speed of 1800 r/min for 30 minutes. Subsequently, in a box furnace with an oxygen concentration ≥96%, the mixture was heated to 500 °C at a heating rate of 3 °C/min and held at 500 °C for 2 hours, subsequently heated to 754 °C and held at 754 °C for 11 hours, and then naturally cooled to room temperature. The material was crushed and sieved through a 300-mesh sieve to obtain a primary sintered product.
(2) The primary sintered product was washed with deionized water at a solid-to-liquid mass ratio of 1.0 for 10 minutes at a stirring speed of 700 rpm and a deionized water temperature of 8 °C. After washing, the sample was placed in a vacuum oven, vacuum-dried at 140 °C for 6 hours, and then naturally cooled to room temperature. The product was sieved through a 300-mesh sieve to obtain a water-washed material.
(3) The water-washed material and boric acid were added to a high-speed mixer at a molar ratio of 1:0.001, stirred at a rotating speed of 1800 r/min for 30 minutes. Subsequently, in a box furnace with oxygen atmosphere, the mixture was heated to 300 °C at a heating rate of 3 °C/min and held at 300 °C for 6 hours, and naturally cooled to room temperature. The product was sieved through a 300-mesh sieve to obtain the modified nickel-based positive electrode material of this example.

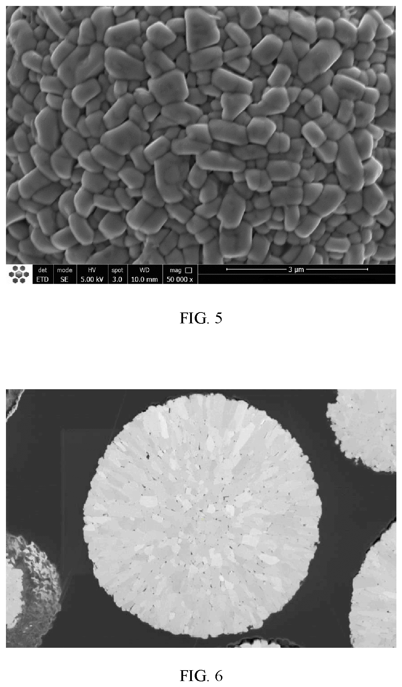

The SEM image of the modified nickel-based positive electrode material of this comparative example is shown in FIG. 5, and it can be seen that the material is crystalline secondary spheres composed of primary particles. Its sectional view is shown in FIG. 6 and it can be seen from the figure that the matrix material has a low porosity. The porosity calculated by image processing is 1.2%. Compared to Example 1, the internal porosity of the matrix in this comparative example is decreased, and the capacity, rate performance, and cycling performance are inferior.

### Comparative Example 2

A modified nickel-based positive electrode material in this comparative example is represented by a chemical formula: Li_{1.0}Ni_{0.90}Co_{0.045}Mn_{0.055}S_{0.0012}B_{0.001}O_{0.9988}, which is composed of polycrystal secondary spheres with a D50 particle size of 9.83 µm, a specific surface area of 0.70 m²/g, and a total residual lithium content of 1432 ppm. The porosity of the modified nickel-based positive electrode material is 2.16%. The mass of the doping element S accounts for 0.03% of the total mass of the modified nickel-based positive electrode material.

The preparation method of the modified nickel-based positive electrode material of this comparative example included the following steps:
(1) Nickel-cobalt-manganese hydroxide precursor Ni_{0.90}Co_{0.045}Mn_{0.055}(OH)₂, lithium hydroxide monohydrate, and lithium sulfate were added to a high-speed mixer at a molar ratio of 1:1.05:0.005, stirred at a rotating speed of 1800 r/min for 30 minutes. Subsequently, in a box furnace with an oxygen concentration ≥96%, the mixture was heated to 500 °C at a heating rate of 3 °C/min and held at 500 °C for 2 hours, subsequently heated to 754 °C and held at 754 °C for 11 hours, and then naturally cooled to room temperature. The material was crushed and sieved through a 300-mesh sieve to obtain a primary sintered product.
(2) The primary sintered product was washed with deionized water at a solid-to-liquid mass ratio of 1.0 for 10 minutes at a stirring speed of 700 rpm and a deionized water temperature of 8 °C. After washing, the sample was placed in a vacuum oven, vacuum-dried at 140 °C for 6 hours, and then naturally cooled to room temperature. The product was sieved through a 300-mesh sieve to obtain a water-washed material.
(3) The water-washed material and boric acid were added to a high-speed mixer at a molar ratio of 1:0.001, stirred at a rotating speed of 1800 r/min for 30 minutes. Subsequently, in a box furnace with oxygen atmosphere, the mixture was heated to 300 °C at a heating rate of 3 °C/min and held at 300 °C for 6 hours, and naturally cooled to room temperature. The product was sieved through a 300-mesh sieve to obtain the modified nickel-based positive electrode material.

### Comparative Example 3

A modified nickel-based positive electrode material in this comparative example is represented by a chemical formula: Li_{1.0}Ni_{0.89}Co_{0.045}Mn_{0.055}S_{0.014}B_{0.001}O_{0.986}, which is composed of polycrystal secondary spheres with a D50 particle size of 9.94 µm, a specific surface area of 0.51 m²/g, and a total residual lithium content of 2227 ppm. The porosity of the modified nickel-based positive electrode material is 3.83%. The mass of the doping element S accounts for 0.45% of the total mass of the modified nickel-based positive electrode material.

The preparation method of the modified nickel-based positive electrode material of this comparative example included the following steps:
(1) Nickel-cobalt-manganese hydroxide precursor Ni_{0.90}Co_{0.045}Mn_{0.055}(OH)₂, lithium hydroxide monohydrate, and lithium sulfate were added to a high-speed mixer at a molar ratio of 1:1.05:0.03, stirred at a rotating speed of 1800 r/min for 30 minutes. Subsequently, in a box furnace with an oxygen concentration ≥96%, the mixture was heated to 500 °C at a heating rate of 3 °C/min and held at 500 °C for 2 hours, subsequently heated to 754 °C and held at 754 °C for 11 hours, and then naturally cooled to room temperature. The material was crushed and sieved through a 300-mesh sieve to obtain a primary sintered product.
(2) The primary sintered product was washed with deionized water at a solid-to-liquid mass ratio of 3.0 for 10 minutes at a stirring speed of 700 rpm and a deionized water temperature of 8 °C. After washing, the sample was placed in a vacuum oven, vacuum-dried at 140 °C for 6 hours, and then naturally cooled to room temperature. The product was sieved through a 300-mesh sieve to obtain a water-washed material.
(3) The water-washed material and boric acid were added to a high-speed mixer at a molar ratio of 1:0.001, stirred at a rotating speed of 1800 r/min for 30 minutes. Subsequently, in a box furnace with oxygen atmosphere, the mixture was heated to 300 °C at a heating rate of 3 °C/min and held at 300 °C for 6 hours, and naturally cooled to room temperature. The product was sieved through a 300-mesh sieve to obtain the modified nickel-based positive electrode material.

### Performance Testing

The electrochemical performance of the positive electrode materials in the above examples and comparative examples was determined using CR2032 coin cells.

Positive electrode plate: The positive electrode material in each of examples 1 to 3 and comparative examples 1 to 3, conductive carbon black (SP), and polyvinylidene fluoride (PVDF) at a mass ratio of 92.5:5:2.5 were dispersed in solvent N-methyl-2-pyrrolidone (NMP) with stirring. The mixture was coated on an aluminum foil substrate, and rolled to obtain the positive electrode plate.
Negative electrode plate: Lithium metal foil.
Electrolyte: 1 mol/L LiPF₆ solution including a mixed solvent of ethylene carbonate (EC) and dimethyl carbonate (DMC) at a mass ratio of 1:2, and an additive of 1 wt% vinylene carbonate (VC).

The CR2032 coin cells were assembled for battery testing. The charge cut-off voltage was 4.35 V, and the discharge cut-off voltage was 3.0 V. The electrical performance test results are shown in Table 1.

**Table 1 Electrical performance test results of the positive electrode materials in Examples 1 to 3 and Comparative Examples 1 to 3**

| | Initial coulombic efficiency (%) | Discharge capacity at 0.1C (mAh/g) | Discharge capacity at 1C (mAh/g) | Rate (%) | Capacity retention after 50 cycles at 45°C (%) | DCR growth rate after 50 cycles at 45°C (%) |
|---|---|---|---|---|---|---|
| Example 1 | 92.5 | 234.2 | 211.8 | 93.0 | 93.9 | 72.1 |
| Example 2 | 92.1 | 232.1 | 210.3 | 92.6 | 93.7 | 74.2 |
| Example 3 | 92.4 | 232.1 | 210.4 | 92.8 | 94.0 | 63.8 |
| Comparative example 1 | 89.8 | 219.8 | 198.5 | 90.2 | 88.3 | 123.9 |
| Comparative example 2 | 90.1 | 223.7 | 202.7 | 91.4 | 92.5 | 91.9 |
| Comparative example 3 | 89.8 | 221.9 | 201.3 | 91.0 | 92.9 | 89.2 |

As can be seen from Table 1, the modified nickel-based positive electrode materials in Examples 1 to 3 can significantly improve the initial discharge capacity and rate performance of the material, and remarkably enhance high-temperature cycling performance, thereby greatly addressing the common issues of high residual lithium content, poor rate performance, and poor cycling performance of high-nickel positive electrode materials in the industry. In Comparative Example 1, no lithium sulfate was used for intercalation and pore formation, resulting in lower porosity and overall inferior capacity, rate performance, and cycling performance. In Comparative Example 2, the amount of intercalation additive was too small, leading to lower porosity and overall inferior capacity, rate performance, and cycling performance as well. In Comparative Example 3, the solid-to-liquid mass ratio during water-washing was relatively high, and thus the intercalated species was not sufficiently removed and remained largely in the interstices between the primary particles, resulting in low porosity and overall inferior capacity, rate performance, and cycling performance. It can be seen that the materials in Comparative Examples 1 to 3 have lower porosity, longer lithium-ion transport distance, and higher polarization internal resistance, leading to poorer capacity, poorer rate performance, and poorer cycling performance, exhibiting overall poorer electrochemical performance compared to the examples.

In summary, the present application modifies the structure and morphology of the nickel-based positive electrode material matrix by using high-electronegativity and high-solubility inorganic acid salt doping combined with a water-washing process to achieve intercalation pore-forming modification, thereby forming a material with lower residual lithium content, higher porosity, and greater stability. This shortens the lithium-ion diffusion distance, accelerates the lithium-ion diffusion rate, eliminates grain boundary stress, reduces lithium-nickel cation mixing, exhibits higher capacity, and provides better rate performance. The high-electronegativity element doping stabilizes lattice oxygen, reduces oxygen loss, and provides higher oxidation potential, thereby improving the structural stability of the material. In addition, the coating process repairs surface structural defects generated during water-washing, reducing surface stress of the material and forming an ion-conducting layer, which protects the material surface, reduces side reactions with the electrolyte during cycling, and thereby improves cycling stability. As a result, high capacity, high rate, and long cycling performance are achieved, satisfying the requirements for long-range EV battery materials.

The above descriptions of the various embodiments tend to emphasize the differences between the embodiments, and identical or similar aspects may be cross-referenced with one another. For brevity, such common aspects are not repeated herein.

It should be noted that the present application is not limited to the above embodiments. The above embodiments are merely examples. Any embodiments that have substantially the same constitution as the technical idea of the present application and exert the same effects within the scope of the technical solutions of the present application are included in the technical scope of the present application. In addition, without departing from the concept of the present application, other embodiments constructed by applying various modifications conceivable by those skilled in the art applied to the embodiments, or by combining some constituent elements of the embodiments, are also included in the scope of the present application.

## Claims

1. A modified nickel-based positive electrode material, comprising a nickel-based positive electrode material matrix and a doping element doped in the nickel-based positive electrode material matrix, wherein the doping element comprises doping element L with a high electronegativity, the electronegativity of the doping element L is higher than that of lithium and transition metal elements in the nickel-based positive electrode material matrix, and a porosity of the modified nickel-based positive electrode material is in a range from 10% to 20%.

2. The modified nickel-based positive electrode material according to claim 1, wherein the electronegativity of the doping element L is greater than 2.0.

3. The modified nickel-based positive electrode material according to claim 1 or 2, wherein the doping element L comprises one or more selected from the group consisting of B, C, N, S, F, Cl, Br, and I.

4. The modified nickel-based positive electrode material according to any one of claims 1 to 3, wherein a mass of the doping element L accounts for 0.05% to 0.2% of a total mass of the modified nickel-based positive electrode material.

5. The modified nickel-based positive electrode material according to any one of claims 1 to 4, wherein a specific surface area of the modified nickel-based positive electrode material is in a range from 0.8 m²/g to 1.5 m²/g, and a total surface residual lithium content of the modified nickel-based positive electrode material is in a range from 1000 ppm to 1800 ppm.

6. The modified nickel-based positive electrode material according to any one of claims 1 to 5, wherein the modified nickel-based positive electrode material is represented by a general chemical formula Li_{z}Ni_{1-x-y}CoₓMe_{y}LᵤMᵥN_{w}O₂₋ₜ, where 0.9≤z≤1.1, 0≤x≤0.2, 0≤y≤0.2, 0 <u≤0.007,0≤v≤0.01, 0≤w≤0.01,-0.05≤t≤0.05, Me comprises Mn, Al, or a combination thereof, M comprises one or more selected from the group consisting of Na, K, Mg, Ca, Sr, Ba, Zr, Ti, and Y, and N comprises one or more selected from the group consisting of B, La, Ce, Al, Co, Ti, and W.

7. A method for preparing the modified nickel-based positive electrode material according to any one of claims 1 to 6, comprising:
(1) mixing a positive electrode material precursor, a lithium source, and a doping agent uniformly, and then sintering to obtain a sintered product;
(2) subjecting the sintered product obtained in step (1) to water-washing and drying to obtain a water-washed product;
(3) uniformly mixing the water-washed product obtained in step (2) with a coating agent containing element N, and then sintering to obtain the modified nickel-based positive electrode material.

8. The method according to claim 7, wherein in step (1), the doping agent comprises an element L-containing doping agent, and a mass ratio of the element L-containing doping agent to the positive electrode material precursor is denoted as *a*, wherein *a* is in a range from 2% to 8%.

9. The method according to claim 8, wherein the element L-containing doping agent is an inorganic acid salt having a solubility *s* greater than 10 g/100 g water at 20 °C.

10. The method according to claim 9, wherein in step (2), during the water-washing, a solid-to-liquid mass ratio is denoted as *b*, wherein *b*≤*s*(1+*a*)/500a.

11. The method according to claim 10, wherein in step (2), during the water-washing, the solid-to-liquid mass ratio *b* is in a range from 0.5 to 1.8.

12. The method according to any one of claims 7 to 11, wherein in step (2), the water-washing is performed at a temperature of 5°C to 25 °C and a stirring speed in a range from 500 rpm to 900 rpm.

13. The method according to any one of claims 7 to 12, wherein the sintering in step (1) comprises two-stage sintering, wherein a first-stage sintering is performed by first heating to a first-stage sintering temperature in a range from 400 °C to 600 °C and holding at the first-stage sintering temperature for 2 hours to 5 hours, and a second-stage sintering is performed by further heating to a second-stage sintering temperature in a range from 700 °C to 900 °C and holding at the second-stage sintering temperature for 8 hours to 20 hours.

14. The method according to any one of claims 7 to 13, wherein the sintering in step (3) is performed at a sintering temperature of 300 °C to 700 °C and held at the sintering temperature for 4 hours to 10 hours.

15. A lithium-ion battery, wherein a positive electrode material in the lithium-ion battery comprises the modified nickel-based positive electrode material according to any one of claims 1 to 6 or the modified nickel-based positive electrode material prepared by the method according to any one of claims 7 to 14.
